Europäisches Patentamt

European Patent Office

Office européen des brevets

(19)

(11) Veröffentlichungsnummer : **0 471 882 B1**

(12) **EUROPÄISCHE PATENTSCHRIFT**

(45) Veröffentlichungstag der Patentschrift :
**09.08.95 Patentblatt 95/32**

(51) Int. Cl.$^6$ : **G05B 19/042**

(21) Anmeldenummer : **90116266.9**

(22) Anmeldetag : **24.08.90**

(54) **Redundantes Automatisierungssystem.**

(43) Veröffentlichungstag der Anmeldung :
**26.02.92 Patentblatt 92/09**

(45) Bekanntmachung des Hinweises auf die
Patenterteilung :
**09.08.95 Patentblatt 95/32**

(84) Benannte Vertragsstaaten :
**CH DE ES FR GB GR LI SE**

(56) Entgegenhaltungen :
**DE-A- 2 931 280**
**IEE PROCEEDINGS E. COMPUTERS &**
**DIGITAL TECHNIQUES. Bd. 131, Nr. 4, Juli**
**1984, STEVENAGE GB Seiten 119 - 174;**
**MOORE W.R. ET AL.: 'REVIEW OF SYNCHRO-**
**NISATION AND MATCHING IN FAULT-TOLE-**
**RANT SYSTEMS '**

(56) Entgegenhaltungen :
**IEEE MICRO. Bd. 7, Nr. 5, Oktober 1987, NEW**
**YORK US Seiten 27 - 50; KIRRMANN H.D. ET**
**AL.: 'FAULT TOLERANT IN PROCESS CON-**
**TROL : AN OVERVIEW AND EXAMPLES OFEU-**
**ROPEAN PRODUCTS '**
**SIEMENS POWER ENGINEERING. Bd. III, Nr.**
**8, August 1980, BERLIN DE Seiten 230 -233; &**
**REICHERT W.: 'SIMATIC S5-110F SAFETY-**
**ORIENTED PROGRAMMABLE CONTROLLER '**
**MESURES REGULATION AUTOMATISME. Bd.**
**51, Nr. 14, November 1986, PARIS FR Seiten 41**
**- 56; LELIEVRE D.: 'TOLERER LES PANNES:**
**UNE NOUVELLE APPROCHE DES API '**

(73) Patentinhaber : **SIEMENS**
**AKTIENGESELLSCHAFT**
**Wittelsbacherplatz 2**
**D-80333 München (DE)**

(72) Erfinder : **Fronk, Gerhard, Dipl.-Ing.**
**Eskilstunastrasse 29**
**D-8520 Erlangen (DE)**

EP 0 471 882 B1

## Beschreibung

Die Erfindung betrifft ein redundantes Automatisierungssystem, bestehend aus mindestens zwei Teilsystemen.

Derartige Automatisierungssysteme werden zur Steuerung von technischen Prozessen verwendet, wenn es darauf ankommt, daß die Prozeßsteuerung hoch verfügbar und/oder fehlersicher arbeitet. Die Veröffentlichung "Fault Tolerance in Process Control : An Overview and Examples of European Products" von H. Kirrmann, in IEEE Micro Band 7, Nr. 5, Oktober 1987, Seiten 27-50 gibt einen Überblick über derartige Systeme.

Gemäß der VDE-Bestimmung 0116 muß auch bei einem Ausfall bzw. einer Funktionsstörung eines Resetgenerators ein unzulässiger Betriebszustand des Automatisierungssystems, z.B. eine zu geringe Versorgungsspannung, sicher erkannt werden und ein Reset ausgelöst werden.

Ein redundanter Aufbau mit mehreren Resetgeneratoren scheiterte bisher an Synchronisierungsproblemen, da aufgrund von unterschiedlichem Ansprechverhalten der Resetgeneratoren ein taktsynchrones, d.h. gleichzeitiges und mit dem Takt synchronisiertes, Auslösen der Resetsignale nicht gewährleistet war.

Der Erfindung liegt die Aufgabe zugrunde, ein redundantes Automatisierungssystem zu schaffen, bei dem auch das Erkennen von unzulässigen Betriebszuständen und in der Folge davon das Einleiten eines Resetvorgangs der Teilsysteme taktsynchron erfolgt. Der Aufwand für die Synchronisation der Resetsignale soll dabei möglichst gering gehalten werden.

Die Aufgabe wird gelöst durch die Merkmale von Anspruch 1. Vorteilhafte, weitere Ausführungen der Erfindung und eine bevorzugte Verwendung derselben sind in den Unteransprüchen angegeben.

Dadurch wird erreicht, daß die Resetsignale an Steuereinheiten der Teilsysteme taktsynchron anstehen und damit auch der Resetvorgang des Automatisierungssystems taktsynchron abläuft.

Weitere Vorteile und Einzelheiten ergeben sich aus der nachfolgenden Beschreibung eines Ausführungsbeispiels und anhand der Zeichnungen. Dabei zeigen:

FIG 1     ein Blockschaltbild eines redundanten Automatisierungssystems,
FIG 2     ein Blockschaltbild der Resetgeneratoren von FIG 1, und
FIG 3     einen typischen zeitlichen Signalverlauf.

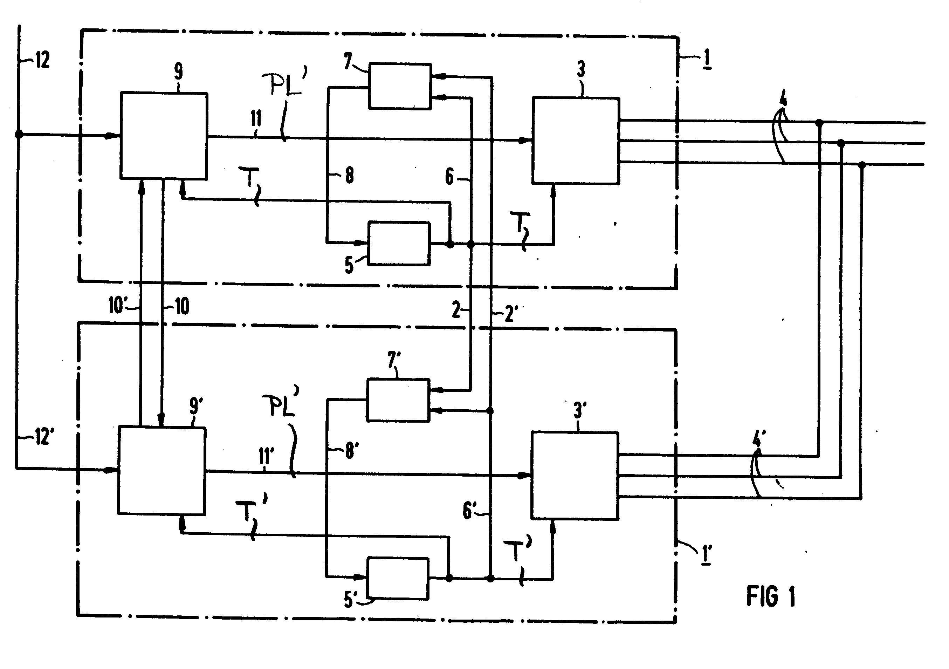

Gemäß FIG 1 weist ein redundantes Automatisierungssystem mindestens zwei identische Teilsysteme 1, 1' auf, die über Leitungen 2, 2' miteinander synchronisiert sind. Da die Teilsysteme 1 und 1' identisch aufgebaut sind, wird im folgenden nur der Aufbau des Teilsystems 1 beschrieben.

Das Teilsystem 1 weist einen Prozessor 3 auf, der über Leitungen 4 mit einem zu steuernden Prozeß verbunden ist, z.B. mit einem Brenner in einem Kraftwerk. Der Prozessor 3 wird vom Taktgeber 5 getaktet. Der Taktgeber 5 ist über die Leitung 6 mit dem Synchronisator 7 verbunden, der als weiteres Eingangssignal über die Leitung 2' den Takt des Taktgebers 5' erhält. Der Synchronisator 7 gibt auf der Leitung 8 ein Korrektursignal aus, so daß die Frequenz des Taktgebers 5 solange verändert wird, bis sie identisch und phasensynchron mit der Frequenz des Taktgebers 5' ist. Die unsynchronisierten Frequenzen der Taktgeber 5, 5' sind in etwa gleich und liegen typisch bei 8 bis 16 MHz.

Der Taktgeber 5 ist z.B. ein spannungskontrollierter Oszillator und der Synchronisator 7 ein Frequenzregler. Der Taktgeber 5 wird dadurch zusammen mit dem Taktgeber 5' über den Synchronisator 7 in einer sogenannten "phase locked loop" betrieben. Durch diese Art der Synchronisation arbeiten beide Teilsysteme takt- und phasensynchron. Im Prinzip kann bei einem der Teilsysteme 1 bzw. 1' der Synchronisator 7 bzw. 7' entfallen, die Ausstattung beider Teilsysteme 1, 1' erhöht jedoch die Verfügbarkeit des Gesamtsystems.

Die Resetschaltung 9 wird ebenfalls vom Taktgeber 5 getaktet, wobei die Resetschaltungen 9 und 9' über Leitungen 10, 10' zur Synchronisierung verbunden sind. Das Ausgangssignal der Resetschaltung 9 wird über die Leitung 11 dem Prozessor 3 zugeführt. Über die Leitung 12 wird eine Resetanforderung detektiert. Über die Leitung 12 kann z.B. die Versorgungsspannung des Automatisierungssystems detektiert werden und ein Reset ausgelöst werden, wenn die Versorgungsspannung unter einen vorwählbaren Wert absinkt.

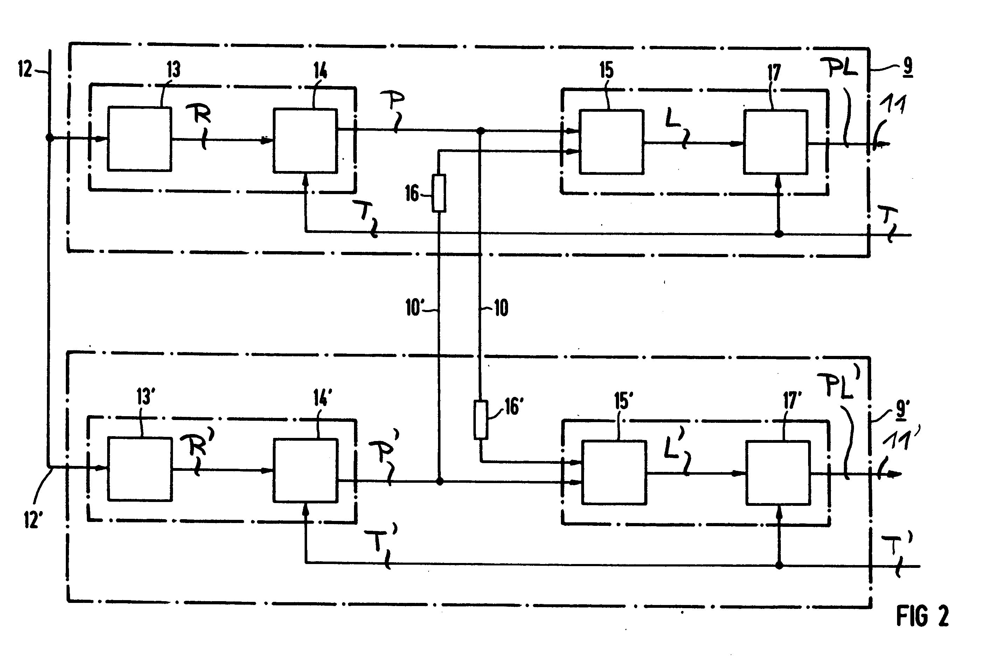

FIG 2 zeigt den Aufbau der Resetschaltungen 9, 9'. Auch in FIG 2 wird der Einfachheit halber nur die Resetschaltung 9 beschrieben. Die Resetschaltung 9' ist identisch aufgebaut.

Gemäß FIG 2 besteht die Resetschaltung 9 aus einem Resetgenerator 13, der über die Passierschaltung 14 mit einem der Eingänge der Logikschaltung 15 verbunden ist. Der andere Eingang der Logikschaltung 15 ist über den Widerstand 16 und die Leitung 10' mit dem Ausgang der Passierschaltung 14' verbunden. Der Ausgang der Logikschaltung 15 ist über die Passierschaltung 17 mit dem Reseteingang des Prozessors 3 verbunden. Die Passierschaltungen 14, 17 sind zur Taktsynchronisierung des Resetsignals mit dem Taktgeber 5 verbunden. Mit Vorteil wird dabei die Passierschaltung 14 mit der gleichen Taktflanke getaktet wie der Prozessor 3 und die Passierschaltung 17 mit der komplementären Taktflanke. Der Resetgenerator 13 kann dabei mit der Passierschaltung 14 und die Logikschaltung 15 mit der Passierschaltung 17 jeweils zu einer Einheit zusammengefaßt sein, wie durch die strichpunktierten Linien angedeutet.

2

Die Passierschaltung 17 ist nicht unbedingt notwendig, sie ermöglicht jedoch die bestmögliche Synchronität der Resetsignale. Falls die Passierschaltung 17 nicht vorhanden ist, ist die Passierschaltung 14 mit Vorteil mit der komplementären Taktflanke getaktet.

Die von der Logikschaltung 15 realisierte logische Funktion hängt von der verwendeten Logik und der Art des Automatisierungssystems ab. Bei positiver Logik (d.h. High-Pegel am Ausgang des Resetgenerators heißt "Reset auslösen") und einem fehlersicheren Automatisierungssystem ist die logisch-ODER-Schaltung die geeignetste. Bei hochverfügbaren, fehlersicheren Automatisierungssystemen wird man eine 2-aus-3-Logik implementieren. Im Ausführungsbeispiel wird eine positive Logik angenommen, wobei die Signale in den Logikschaltungen 15, 15' gemäß der logisch-ODER-Funktion miteinander verknüpft werden.

Da, wie untenstehend näher erläutert werden wird, die Elemente 14, 15 und 17 nur geringe Gatterlaufzeiten aufweisen dürfen, werden für diese Schaltungen mit Vorteil ACMOS-Schaltungen verwendet, deren Gatterlaufzeiten nur ca. 10 ns betragen.

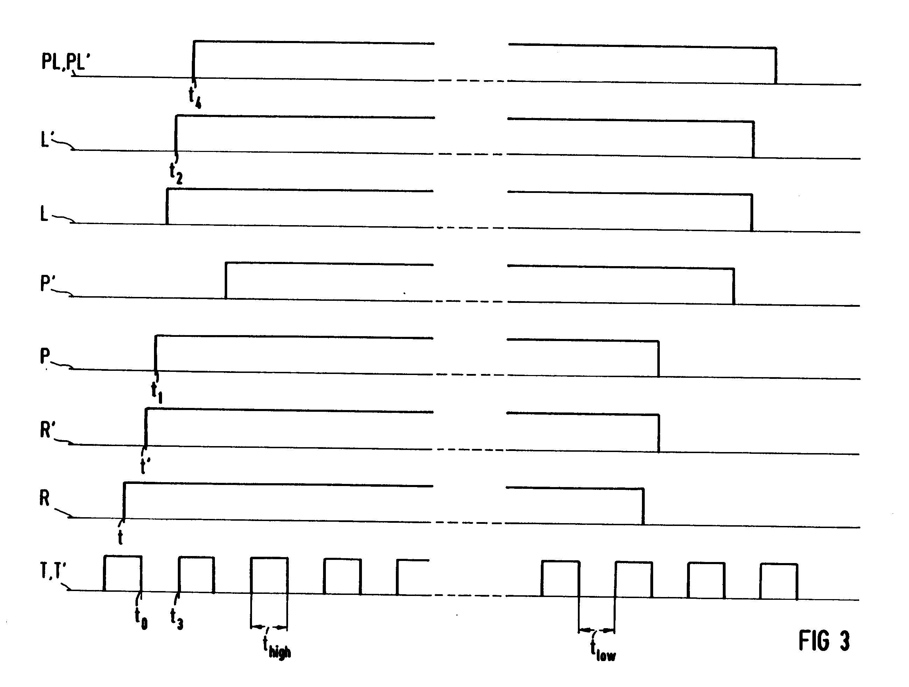

FIG 3 zeigt die Wirkungsweise der in FIG 2 beschriebenen Schaltung. FIG 3 zeigt von unten nach oben
- den Takt T bzw. T' des Taktgebers 5 bzw. 5',
- die von den Resetgeneratoren 13, 13' gelieferten Ausgangssignale R bzw. R',
- die von den Passierschaltungen 14, 14' gelieferten getakteten Ausgangsignale P bzw. P',
- die von den Logikschaltungen 15, 15' gelieferten Auswertungsergebnisse L bzw. L', und
- die von den Passierschaltungen 17, 17' gelieferten getakteten Auswertungsergebnisse PL, PL'.

Ab einem beliebigen Zeitpunkt t zeigt der Resetgenerator 13 eine unzulässige Unterspannung auf der Leitung 12 an. Ab einem ebenfalls beliebigen, nicht unbedingt mit der Zeit t identischen Zeit t' zeigt der Resetgenerator 13' ebenfalls eine unzulässige Unterspannung auf der Leitung 12' an.

Im folgenden wird angenommen, daß die Prozessoren 3, 3' und die Passierschaltungen 14, 14' mit der abfallenden Taktflanke des Taktsignals und die Passierschaltungen 17, 17' mit der ansteigenden Flanke des Taktsignals getaktet sind.

Die nächste abfallende Taktflanke des Taktes T bzw. T' nach der Zeit t wird mit $t_0$ bezeichnet. Zum Zeitpunkt $t_1$, wobei $t_1$ größer als $t_0$ ist, steigt das Ausgangssignal P der Passierschaltung 14 von "low" auf "high", da zum Zeitpunkt $t_0$ das Signal R "low" war. Da, wie obenstehend beschrieben, für die Logikschaltungen 15, 15' ODER-Schaltungen angenommen wurden, steigen die Ausgangssignale L, L' der Logikschaltungen 15, 15' spätestens bis zum Zeitpunkt $t_2$ ebenfalls auf "high". Zur Zeit $t_4$, die größer als $t_3$ ist, steigen die Signale PL, PL' der Passierschaltungen 17, 17' ebenfalls auf den Wert "high". $t_3$ bezeichnet dabei den Zeitpunkt der ersten ansteigenden Taktflanke des Taktes T bzw. T' nach der Zeit $t_2$.

Damit die den Prozessoren 3, 3' zugeführten Resetsignale PL, PL' taktsynchronisiert sind, müssen folgende Bedingungen erfüllt sein:

$$t_2 - t_0 < t_{low} \qquad \text{Gl.1}$$

$$t_4 - t_3 < t_{high} \qquad \text{Gl.2}$$

wobei $t_{low}$ und $t_{high}$ die Zeiten während einer Taktperiode des Taktes T bzw. T' sind, bei dem der Takt T bzw. T' den Signalpegel "low" bzw. "high" hat.

Gleichung 1 ist sicher erfüllt, wenn

$$t_{14} + t_{15} + T_{S17} < t_{low} \qquad \text{Gl.3}$$

wobei $t_{14}$ und $t_{15}$ die maximalen Reaktionszeiten der Passierschaltungen 14, 14' und der Logikschaltungen 15, 15' sind. $t_{S17}$ ist die Zeit unmittelbar vor einer ansteigenden Taktflanke, während der der neue Signalpegel, in diesem Fall der "high"-Pegel, mindestens am Eingang der Passierschaltung 17 anliegen muß, um ein sicheres Umschalten der Passierschaltung 17 zu gewährleisten. $t_{S17}$ wird im allgemeinen als Setupzeit der Passierschaltung 17 bezeichnet.

Die Gleichung 2 ist sicher dann erfüllt, wenn

$$t_{17} + t_{S3} < t_{high} \qquad \text{Gl.4}$$

wobei $t_{17}$ die maximale Reaktionszeit der Passierschaltungen 17, 17' ist. $t_{S3}$ ist die Setupzeit des Prozessors 3.

Insbesondere müssen die obigen Gleichungen 1 bis 4 nicht nur beim Signalanstieg, sondern auch beim Signalabfall erfüllt sein, um eine taktsynchronen Anlauf der Prozessoren 3 und 3' nach dem Ende einer Resetanforderung zu gewährleisten. Typische Zeiten für $t_{low}$ und $t_{high}$ sind 30 bis 80 ns. Die obigen Gleichungen 1 bis 4 sind also sicher erfüllt, wenn die Gatterlaufzeiten der Schaltungen 14, 14', 15, 15', 17, 17' und damit auch die Reaktionszeiten $t_{14}$, $t_{15}$ und $t_{17}$ ca. 10 ns betragen. Diese Bedingung ist bei ACMOS-Schaltungen erfüllt. Die Ansprechzeit der Resetgeneratoren 13, 13' dagegen ist nicht kritisch; sie kann durchaus im Bereich über 80 ns liegen.

Die Resetsignale PL, PL' sind dann sicher taktsynchron, wenn die maximale Signallaufzeit zwischen zwei getakteten Einheiten kleiner als die Zeit vom Takten der einen Einheit zum Takten der zweiten Einheit ist. Im Ausführungsbeispiel können daher die Passierschaltungen 17, 17' entfallen, wenn z.B. Passierschaltungen 14, 14' mit der ansteigenden Flanke des Taktes T bzw. T' getaktet sind und die Bedingung

$$t_{14} + t_{15} + t_{S3} < t_{high} \quad \text{Gl.5}$$

erfüllt ist.

**Patentansprüche**

1. Redundantes Automatisierungssystem, bestehend aus mindestens zwei Teilsystemen (1,1'), wobei
    a) ein jedes Teilsystem (1,1') aufweist
        a1) eine Steuereinheit (3,3'), insbesondere in Form eines Prozessors,
        a2) eine Resetschaltung (9,9'), welche auf die jeweilige Steuereinheit (3,3'), insbesondere bei Auftreten von unzulässigen Betriebszuständen des Automatisierungssystems, einwirkt (12,12',11,11'), und
        a3) einen Taktgeber (5,5') zur Taktung (T,T') der Steuereinheit (3,3'), und wobei
    b) zur teilsystemübergreifenden Taktsynchronisierung der Teilsysteme (1,1') vorhanden sind
        b1) erste Mittel (2,2',6,6',7,7',8,8') zur Taktsynchronisierung der Taktgeber (5,5') in den Teilsystemen (1,1'), und
        b2) zweite Mittel (10,16';10',16;13,14;13',14') zur Taktsynchronisierung der Resetschaltungen (9,9') in den Teilsystemen (1,1').

2. Redundantes Automatisierungssystem nach Anspruch 1, wobei die zweiten Mittel zur Taktsynchronisierung pro Teilsystem enthalten jeweils eine getaktete Resetschaltung (9,9'), die
    a) jeweils vom Taktgeber (5,5') des entsprechenden Teilsystems (1,1') getaktet (T,T') sind, und die
    b) teilsystemübergreifend über zur Synchronisation dienenden Leitungen (10,10') wechselseitig miteinander verbunden sind (Fig.1).

3. Redundantes Automatisierungssystem nach Anspruch 2, wobei jede getaktete Resetschaltung (9,9') enthält
    a) eine Reihenschaltung aus einem Resetgenerator (13,13'), einer Passierschaltung (14,14') und einer Logikschaltung (15,15'),
    wobei zur Taktsynchronisation
        b1) die jeweilige Passierschaltung (14,14') vom Taktgeber (5,5') des entsprechenden Teilsystems (1,1') getaktet (14,14') wird, und
        b2) teilsystemübergreifend verbunden sind, insbesondere über mit Widerständen (16',16) versehenen Leitungen (10,10'), der Ausgang der Passierschaltung (14) eines Teilsystems (1) mit einem Eingang der Logikschaltung (15') des anderen Teilsystems (1'), und der Ausgang der Passierschaltung (14') des anderen Teilsystems (1') mit einem Eingang der Logikschaltung (15) des einen Teilsystems (1) (Fig.2).

4. Redundantes Automatisierungssystem nach Anspruch 3, wobei
    pro Teilsystem (1,1') in jeder getakteten Resetschaltung (9,9') der Reihenschaltung aus dem Resetgenerator (13,13'), der Passierschaltung (14,14') und der Logikschaltung (15,15') eine weitere Passierschaltung (17,17') nachgeschaltet ist, welche vom Taktgeber (5,5') des entsprechenden Teilsystems (1,1') getaktet (14,14') wird (Fig.2).

5. Redundantes Automatisierungssystem nach Anspruch 3 oder 4, wobei pro Teilsystem (1,1')
    a) die Steuereinheiten (3,3') und in jeder getakteten Resetschaltung (9,9') zumindest die Passierschaltung (14,14') mit der abfallenden Flanke des Taktes (T,T') des jeweiligen Taktgebers (5,5'), und
    b) die weitere Passierschaltung (17,17'), soweit in der jeweiligen getakteten Resetschaltung (9,9') vorhanden, mit der ansteigenden Flanke des Taktes (T,T') des jeweiligen Taktgebers (5,5')
    getaktet sind.

6. Redundantes Automatisierungssystem nach Anspruch 3,4 oder 5, wobei
    die Logikschaltungen (15,15') pro Teilsystem (1,1') in Form einer logisch-ODER-Schaltung für die zugeführten Eingangssignale ausgeführt sind.

7. Redundantes Automatisierungssystem nach einem der vorangegangenen Ansprüche, wobei

die zweiten Mittel (10,16';10',16;13,14;13',14') zur Taktsynchronisierung, insbesondere die Passierschaltungen (14, 14';17,17') und Logikschaltungen (15,15') der getakteten Resetschaltungen (9,9') pro Teilsystem (1,1'), unter Einsatz von ACMOS-Schaltungen aufgebaut sind.

8. Verwendung eines redundanten Automatisierungssystems nach einem der vorangegangenen Ansprüche zur Steuerung eines technischen Prozesses, insbesondere zur Brennersteuerung in einem Kraftwerk.

## Claims

1. Redundant automation system, consisting of at least two subsystems (1, 1'), whereby
   a) each subsystem (1, 1') has
       a1) a control unit (3, 3'), in particular in the form of a processor,
       a2) a reset circuit (9, 9') which acts on the respective control unit (3, 3'), in particular with the occurrence of inadmissible operating states of the automation system (12, 12', 11, 11'), and
       a3) a clock-pulse generator (5, 5') for the clocking (T, T') of the control unit (3, 3'), and whereby
   b) for the subsystem-crossing clocking of the subsystems (1, 1') there are present
       b1) first means (2, 2', 6, 6', 7, 7', 8, 8') for the clocking of the clock-pulse generators (5, 5') in the subsystems (1, 1'), and
       b2) second means (10, 16'; 10', 16; 13, 14; 13', 14') for the clocking of the reset circuits (9, 9') in the subsystems (1, 1').

2. Redundant automation system according to claim 1, whereby the second means for the clocking contain per subsystem in each case a clocked reset circuit (9, 9') which
   a) are in each case clocked (T, T') by the clock-pulse generator (5, 5') of the corresponding subsystem (1, 1'), and which
   b) are connected alternately to each other in subsystem-crossing manner by way of lines (10, 10') serving the synchronization (Figure 1).

3. Redundant automation system according to claim 2, whereby each clocked reset circuit (9, 9') contains
   a) a series circuit comprising a reset generator (13, 13'), a passing circuit (14, 14') and a logic circuit (15, 15'),
   whereby for the clocking
       b1) the respective passing circuit (14, 14') is clocked (14, 14') by the clock-pulse generator (5, 5') of the corresponding subsystem (1, 1'), and
       b2) there are connected in subsystem-crossing manner, in particular by way of lines (10, 10') provided with resistances (16', 16), the output of the passing circuit (14) of a subsystem (1) and an input of the logic circuit (15') of the other subsystem (1'), and the output of the passing circuit (14') of the other subsystem (1') and an input of the logic circuit (15) of the one subsystem (1) (Figure 2).

4. Redundant automation system according to claim 3, whereby per subsystem (1, 1') in each clocked reset circuit (9, 9') of the series circuit comprising the reset generator (13, 13'), the passing circuit (14, 14') and the logic circuit (15, 15') a further passing circuit (17, 17') is subsequently connected, which is clocked (14, 14') by the clock-pulse generator (5, 5') of the corresponding subsystem (1, 1') (Figure 2).

5. Redundant automation system according to claim 3 or 4, whereby per subsystem (1, 1')
   a) the control units (3, 3') and in each clocked reset circuit (9, 9') at least the passing circuit (14, 14') are clocked with the falling edge of the clock pulse (T, T') of the respective clock-pulse generator (5, 5'), and
   b) the further passing circuit (17, 17'), as far as is present in the respective clocked reset circuit (9, 9'), is clocked with the rising edge of the clock pulse (T, T') of the respective clock-pulse generator (5, 5').

6. Redundant automation system according to claim 3, 4 or 5, whereby the logic circuits (15, 15') per subsystem (1, 1') are designed in the form of a logic OR circuit for the input signals supplied.

7. Redundant automation system according to one of the preceding claims, whereby the second means (10, 16'; 10', 16; 13, 14; 13', 14') for the clocking, in particular the passing circuits (14, 14'; 17, 17') and logic circuits (15, 15') of the clocked reset circuits (9, 9') per subsystem (1, 1'), are assembled with the use of ACMOS circuits.

8. Use of a redundant automation system according to one of the preceding claims for the control of a technical process, in particular for burner control in a power station.

**Revendications**

1. Système d'automatisation redondant, constitué par au moins deux systèmes partiels (1,1'), et dans lequel
   a) chaque système partiel (1,1') comporte
   a1) une unité de commande (3,3'), notamment sous la forme d'un processeur,
   a2) un circuit de remise à l'état initial (9,9'), qui agit (12,12',11,11') sur l'unité de commande respective (3,3'), notamment lors de l'apparition d'états de fonctionnement inadmissibles du système d'automatisation, et
   a3) un générateur de cadence (5,5') servant à commander de façon cadencée (T,T') l'unité de commande (3,3'), et dans lequel
   b) pour la synchronisation cadencée des systèmes partiels (1,1'), qui englobe ces systèmes, sont prévus
   b1) des premiers moyens (2,2',6,6',7,7',8,8') pour synchroniser de façon cadencée les générateurs de cadence (5,5') dans les systèmes partiels (1,1'), et
   b2) des seconds moyens (10,16';10',16;13,14;13',14') pour synchroniser de façon cadencée les circuits de remise à l'état initial (9,9') dans les systèmes partiels (1,1').

2. Système d'automatisation redondant suivant la revendication 1, dans lequel les seconds moyens de synchronisation de cadence pour chaque système partiel contiennent des circuits respectifs de remise à l'état initial (9,9'), commandés de façon cadencée, et qui
   a) sont commandés de façon cadencée (T,T') respectivement par le générateur de cadence (5,5') du système partiel correspondant (1,1'), et qui
   b) sont reliés alternativement entre eux, d'une manière englobant les systèmes partiels, par l'intermédiaire de lignes (10,10') utilisées pour la synchronisation (figure 1).

3. Système d'automatisation redondant suivant la revendication 2, dans lequel chaque circuit de remise à l'état initial (9,9') commandé de façon cadencée, comporte
   a) un circuit série formé d'un générateur de remise à l'état initial (13,13'), un circuit de transmission (14,14') et un circuit logique (15,15'),
   et dans lequel pour la synchronisation cadencée
   b1) le circuit respectif de transmission (14,14') est commandé de façon cadencée (14,14') par le générateur de cadence (5,5') du système partiel correspondant (1,1'), et
   b2) la sortie du circuit de transmission (14) d'un système partiel (1) est reliée, d'une manière englobant les systèmes partiels, notamment par l'intermédiaire de lignes (10,10') pourvues de résistances (16',16), à une entrée du circuit logique (15') de l'autre système partiel (1'), et la sortie du circuit de transmission (14') de l'autre système partiel (1) est reliée, d'une manière englobant les systèmes partiels, notamment par l'intermédiaire desdites lignes, à une entrée du circuit logique (15) d'un système partiel (1) (figure 2).

4. Système d'automatisation redondant suivant la revendication 3, dans lequel
   pour chaque système partiel (1,1'), dans chaque circuit de remise à l'état initial (9,9') commandé de façon cadencée, et en aval du montage série formé par le générateur de remise à l'état initial (13,13'), le circuit de transmission (14,14') et le circuit logique (15,15'), est branché un autre circuit de transmission (17,17'), qui est commandé de façon cadencée (14,14') par le générateur de cadence (5,5') du système partiel correspondant (1,1') (figure 2).

5. Système d'automatisation redondant suivant la revendication 3 ou 4, dans lequel pour chaque système partiel (1,1')
   a) les unités de commande (3,3') et, dans chaque circuit de remise à l'état initial (9,9') commandé de façon cadencée, au moins les circuits de transmission (14,14') sont commandés de façon cadencée par le flanc retombant de la cadence (T,T') du générateur de cadence respectif (5,5'), et
   b) l'autre circuit de transmission (17,17') est commandé de façon cadencée par le flanc montant de la

6

cadence (T,T′) du générateur de cadence respectif (5,5′), dans la mesure où ce circuit de transmission est présent dans le circuit respectif de remise à l'état initial (9,9′) commandé de façon cadencée.

6. Système d'automatisation redondant suivant la revendication 3, 4 ou 5, dans lequel les circuits logiques (15,15′) sont réalisés, pour chaque système partiel (1,1′), sous la forme d'un circuit OU logique pour les signaux d'entrée envoyés.

7. Système d'automatisation redondant suivant l'une des revendications précédentes, dans lequel les seconds moyens (10,16′;10′,16;13,14;13′,14′) pour réaliser la synchronisation cadencée, notamment les circuits de transmission (14,14′; 17,17′) et les circuits logiques (15,15′) des circuits de remise à l'état initial (9,9′) commandés de façon cadencée, sont constitués, pour chaque système partiel (1,1′), moyennant l'utilisation du circuit ACMOS.

8. Utilisation d'un système d'automatisation redondant suivant l'une des revendications précédentes pour la commande d'un processus technique, notamment la commande de brûleurs dans une centrale électrique.

FIG 1

EP 0 471 882 B1

FIG 2

EP 0 471 882 B1

EP 0 471 882 B1

FIG 3

PL,PL'

L'

L

P'

P

R'

R

T,T'

$t_{low}$

$t_{high}$

$t_6$

$t_2$

$t_1$

$t_3$

$t_0$

10